# EUROPEAN PATENT SPECIFICATION

(11) **EP 4 001 070 B1**
(45) Date of publication and mention of the grant of the patent: **14.05.2025**
(21) Application number: 20382990.8
(22) Date of filing: 16.11.2020
(51) Int. Cl.: B62H 3/12, B62H 3/02, B62H 3/08

(54) **PARKING SYSTEM FOR STORING A PLURALITY OF TWO WHEELED VEHICLES**
PARKSYSTEM ZUM ABSTELLEN EINER VIELZAHL VON ZWEIRADFAHRZEUGEN
SYSTÈME DE STATIONNEMENT POUR LE STOCKAGE D'UNE PLURALITÉ DE VÉHICULES À DEUX ROUES

(43) Date of publication of application: 25.05.2022
(73) Proprietor: Ignasi Clotet, S.L.U., 25230 Mollerusa (ES)
(72) Inventor: Sas Capdevila, Xavier, 25400 Les Borges Blanques (ES); Caba Muntada, Joan, 25230 Mollerusa (ES)
(74) Representative: Curell Suñol S.L.P.

(56) References cited:
- WO-A1-2013/120141
- WO-A2-2010/091275
- AU-A1- 2015 275 218
- CN-A- 107 605 191
- CN-U- 208 039 936
- JP-A- 2000 213 194
- JP-A- 2006 152 537
- JP-B2- 4 983 167
- US-A1- 2019 366 862

## Description

### Field of the invention

The invention relates to a parking system for storing a plurality of two wheeled vehicles, comprising a storage enclosure with at least one opening for introducing and extracting said vehicles to be stored in said parking system, a first carrousel type transporting device arranged inside said enclosure comprising a first carrousel guiding path defining a guiding direction and a plurality of first single vehicle holding devices, each of said first vehicle holding devices holding a corresponding single vehicle and being movable along said first carrousel guiding path in said guiding direction.

### State of the art

In the recent years due to environmental reasons and for sake of sustainability two wheeled transport such as with bicycles and scooters has become more and more popular in the world and has experienced an exponential growth. Both conventional bicycles as well as scooters, but also their electrified versions are more and more used in the cities as an alternative to private cars or public transport.

To cover these needs many cities have invested in public collective bicycle or scooter sharing services, allowing users to use a public bicycle against a monthly fee. This provides for users not having to own a bicycle which is an important advantage. However, these systems are not always reliable in terms of availability of bicycles. Therefore, although these collective services have been a relevant great success, many riders of middle to large size cities opt for owing and riding their own bicycle or scooter. This is an advantage in terms of flexibility for the rider. Furthermore, owing an own vehicle has the advantage the user does not have to ride a vehicle which often is not in perfect mechanical conditions.

Furthermore, this social change for sustainability has even been accelerated and increased during this year 2020 due to the Covid pandemic. In middle to large size cities many people want to avoid public transportation to not to be obliged to travel in closed spaces with a relevant amount of people. This has also impacted on vehicle sharing public services, because although many hygienic measures are taken both in public transportation as well as in vehicle sharing services, sharing one same space or a vehicle can eventually favour illness spreading.

In any case, middle and large size cities were not ready for this great increase of private two wheeled transportation and thus there is a need for two wheeled vehicle storage capacity.

Furthermore, most of the cities have space problems in the city centre, i.e. there is not much construction space for creating new storing facilities.

In this context CN 108560962 A discloses a suspension-type bicycle parking device with automatic parking and taking functions. When a bicycle is suspended in the air vertically to utilize the space to the largest extent, safety and convenience are achieved, and the problems of lack of parking spaces and parking difficulty in urban communities are solved effectively. The suspension-type bicycle parking device comprises a support frame, a vertical lifting component and a suspended conveying component. The vertical lifting component comprises a guide rail and an electric fixture. The guide rail is arranged along the height direction of the support frame. The electric fixture is movably arranged on the guide rail and slides up and down relative to the guide rail to clamp the bicycle. The suspended conveying component can rotate relative to the guide rail and comprises a plurality of automatic hooks. When the suspended conveying component rotates to a set position, one automatic hook corresponding to the electric fixture hooks the bicycle.

WO2010091275A2 is according to the preamble of claim 1 and discloses a system, device and method for providing public, high-density bicycle storage and protection from elements and theft. System includes overhead conveyors from which bicycles are hung in a near side/far side arrangement where handlebars of only every other bicycle are aligned.

AU2015275218A1 discloses a method, system and apparatus for bicycle storage through means of an automatic, multi-level housing enclosure in which users can store their bicycles in individual, secure storage boxes that are then robotically manoeuvred to and from vacant storage spaces.

CN107605191A discloses an overturning bicycle garage. The overturning bicycle garage includes a garage body, a plurality of parking supports for storing and fetching of bicycles, and a transmission mechanism for allowing the parking supports to lift and overturn. The overturning bicycle garage is of a three-dimensional parking structure.

US2019366862A1 discloses a parking and charging station for electric vehicles. The parking and charging station has a small footprint and data transfer capability. The electric vehicles may include e-bikes and e-scooters, but other similar vehicles may also be supported. The parking and charging station may include a vertical automatic and motorized conveyor. The parking and charging station may include a standalone vertical post with one or more bars attached horizontally.

JP2000213194A discloses a multi-storey bicycle parking lot, capable of housing a number of bicycles vertically.

### Summary of the invention

It is an object of the invention to propose a parking system for storing a plurality of two wheeled vehicles which is optimized in terms of public space occupation in the street and which easy to install. Another aspect of the invention is that the system can be easily enlarged. This purpose is achieved by a parking system of the type indicated at the beginning, according to claim 1.

This vehicle orientation provides for a narrower configuration. A narrow configuration is especially interesting when the parking system must occupy pedestrian areas such as sidewalks, parks, or gardens. This allows for installation in the middle of the road, consuming less space than those systems of the state of the art. Furthermore, the carrousel configuration allows for growing the system in length as much as desired to provide more storage capacity, without any other limitation than the available linear space.

Two wheeled vehicles according to the invention refer to vehicles such as bicycles, scooters, both manual or electric, small motorbikes or the like.

The invention further includes several preferred features that are object of the dependent claims and the utility of which will be highlighted hereinafter in the detailed description of an embodiment of the invention.

Preferably said carrousel type transporting device has a first and a second branches said first and second transporting branches being parallel to each other and mutually connected with connecting curved sections.

According to the invention the first carrousel guiding path lies on a plane. This allows for a very compact configuration in height.

Although in the street the longitudinal space is not the most limiting parameter when implementing a parking system as the one of the invention, it is preferable that it has the less urban impact possible. To this end, in a preferred embodiment said holding devices are configured to hold said vehicle with one first wheel above a second wheel.

Preferably, said holding devices hold said vehicle in vertical position, that is the centre of the first and second wheels lie on a line substantially perpendicular to an horizontal plane. This provides for a more compact configuration, increasing the capacity of the parking system.

In an alternative embodiment said holding devices are configured to hold said vehicle with one first wheel in front of the second wheel, that is the centre of the first and second wheels lie on a line substantially parallel to an horizontal plane. This configuration makes the storage of the vehicle more comfortable for the user.

This provides for a more compact configuration in height, thus reducing the vertical space required for parking system. Preferably, said holding devices hold said vehicle in a vertical position.

In another embodiment said enclosure is mounted on a bridging frame mounted on a ground level, said bridging frame being raised at least two meters above the ground level and in that it comprises a vehicle elevation device movable between said ground level and said at least one opening level for delivering said vehicles.

Thanks to this configuration, the ground level is liberated for other uses. The space below the storage enclosure can be used of other purposes, such as simply free the space for pedestrians, as a charging station for electric vehicles or for a shop or kiosk.

In a further embodiment of the invention, the system further comprises a plurality second single vehicle holding devices, each of said second vehicle holding devices holding a single vehicle and being movable along said first carrousel guiding path in said guiding direction, said second single vehicle holding devices being basket shaped and dimensioned to receive a scooter like vehicle.

Baskets are conceived to receive foldable scooters.

Especially preferably the system of the invention comprises a second carrousel type transporting device arranged inside said enclosure side by side with said first carrousel type transporting device, comprising a second carrousel guiding path defining a guiding direction and said second carrousel guiding path lying on a horizontal plane, a plurality of said second single vehicle holding devices, each of said second vehicle holding devices being movable along said second carrousel guiding path in said guiding direction.

Preferably said second carrousel type transporting device is arranged parallel to said first carrousel type transporting device to make a compact configuration.

Also, it is especially desirable that these kind of parking systems are as autonomous as possible. It is not self-evident that the system can be easily connected to an electrical network. Therefore, in a further embodiment said enclosure comprises a roof, and said parking system further comprises a plurality of solar panels, arranged at least on the roof of said enclosure and said solar panels are connected to at least a power supply point for supplying electrical vehicle.

Especially preferably said parking system comprises automated control means, said automated control means controlling autonomously the storage of the vehicles.

In a preferred embodiment for holding bicycles, said first holding device comprises an L shaped body with a concave cross section configured to simultaneously receive both wheels of said vehicle, and a biasing stopper movable between a loose position in which said vehicle can be separated from said first holding device and a biased position in which said stopper urges said vehicle against the base of said L shaped body.

Likewise, the invention also includes other features of detail illustrated in the detailed description of an embodiment of the invention and in the accompanying figures.

### Brief description of the drawings

Further advantages and features of the invention will become apparent from the following description, in which, without any limiting character, preferred embodiments of the invention are disclosed, with reference to the accompanying drawings in which:
Figure 1, a general isometric view of a first embodiment of the parking system for storing a plurality of two wheeled vehicles according to the invention.
Figure 2, an isometric view of the interior of a second embodiment of the parking system according to the invention.
Figure 3, a front view of the inside of the parking system of Figure 2.
Figure 4, a top view of the inside of the parking system of Figure 2.
Figure 5, a back view of the inside of the parking system of Figure 2.
Figure 6, an isometric view of the inside of a third embodiment of the parking system according to the invention.
Figure 7, a side view of the interior of the parking system of Figure 6.
Figure 8, a front view of the interior of the parking system of Figure 6.
Figure 9, a top view of the embodiment of Figure 7.
Figure 10, an isometric view of the interior of a fourth embodiment of the parking system of the invention.
Figure 11, a side view of the interior of the parking system of Figure 10.
Figure 12, a front view of the interior of the parking system of Figure 10.
Figure 13, a top view of the embodiment of Figure 10.
Figure 14, an isometric view of a fifth embodiment of the parking system according to the invention.
Figure 15, an isometric view of the interior of the parking system of Figure 14.
Figure 16, a front view of the interior of the parking system of Figure 14.
Figure 17, a top view of the embodiment of Figure 14.
Figure 18, an isometric view of the interior of a sixth embodiment of the parking system according to the invention.
Figure 19, a front view of the interior of the parking system of Figure 18.
Figure 20, a top view of the embodiment of Figure 18.
Figure 21, a general isometric view of a seventh embodiment of the parking system according to the invention.

### Detailed description of embodiments of the invention

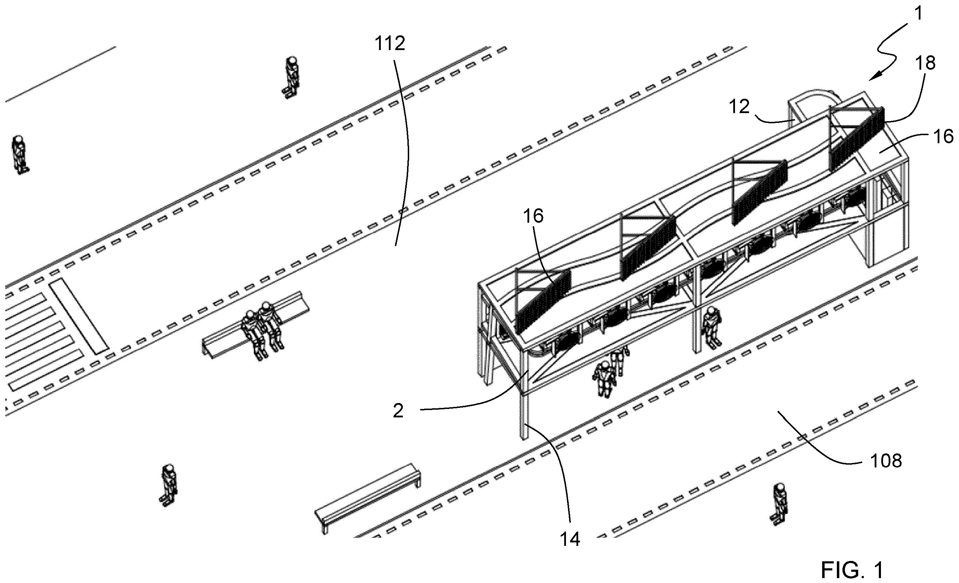

Figure 1 shows a first embodiment of a parking system 1 for storing a plurality of two wheeled vehicles. As already explained the object of the parking system 1 according to the invention is to spare as much public space as possible in order for it to be installable in the middle of the street without the need of complex construction processes.

The parking system 1 of Figure 1 is a parallelepipedal steel enclosure 2 supported on a bridging frame 14. The bridging frame 14 provides for a free space below the parking system 1. This free space can be used for other public objects, such as a bus station, a vending point, a small supermarket, a kiosk, or a charging spot for electrical vehicles.

Preferably, the parking system 1 of the invention due to its narrow configuration can be mounted on sidewalks 112 either on the ground level or raised over the ground level.

As it is apparent from Figure 1, the enclosure 2 comprises a roof 16 and the parking system 1 further comprises a plurality of solar panels 18, arranged on the roof of the enclosure 2. Optionally, further solar panels could be also arranged on the side walls of the parking system.

The solar panels 18 of Figure 1 are connected to at least a power supply point no shown in detail in Figure 1. Additionally, these solar panels 18 can provide for power supply for the whole operation of the parking system 1.

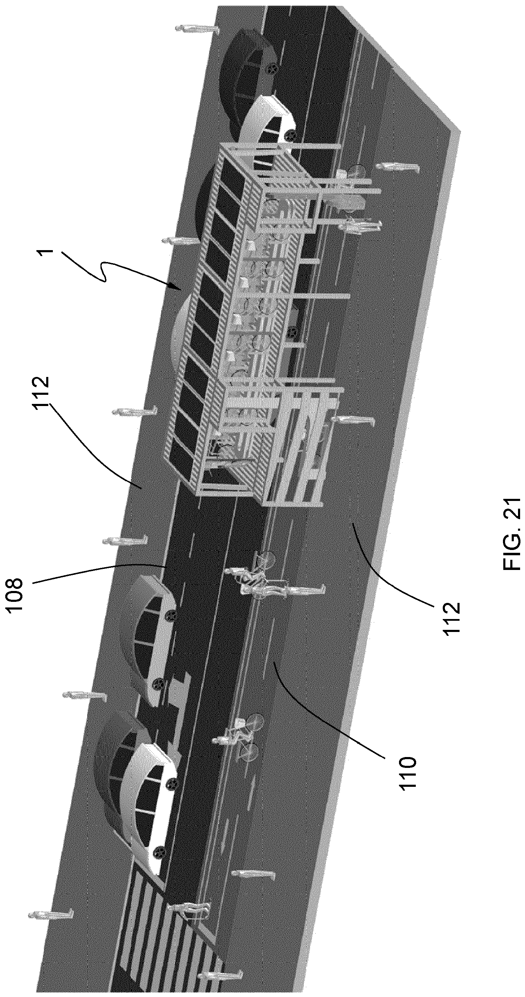

In Figure 1, the parking system 1 is mounted on the sidewalk 112, adjacent to the car lane 108. However, Figure 21 shows an alternative configuration in which thanks to the bridging frame 14, the parking system 1 is mounted over a bicycle lane 110, thus liberating the sidewalk 112 and the bicycle lane 110 and allowing riders to pass below the parking system 1.

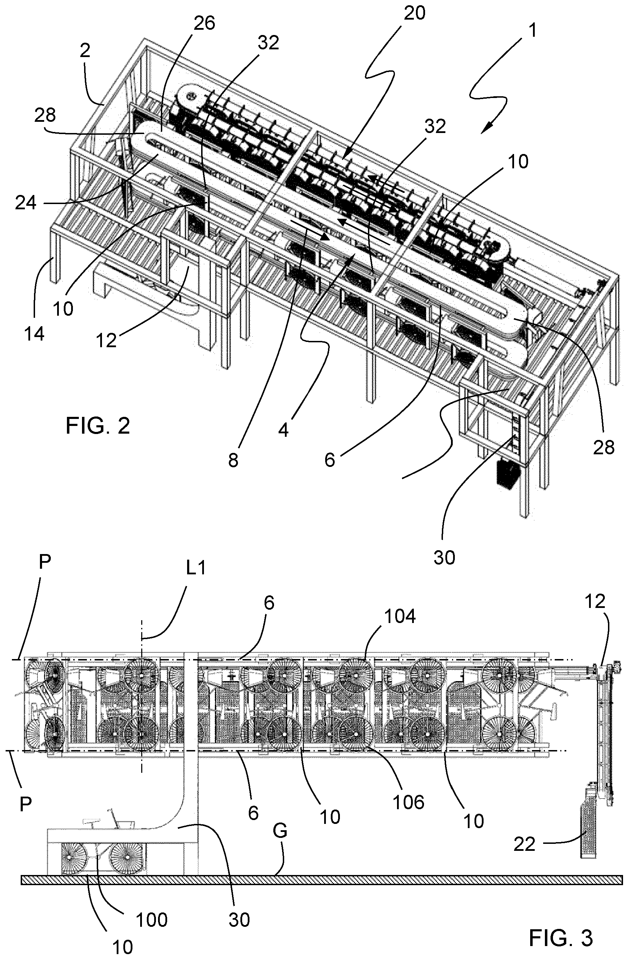

Figures 2 to 5 show in more detail the inside of a second embodiment of the invention.

The parking system 1 of Figures 2 to 5 is conceived for storing a plurality of two wheeled vehicles 100 such as bicycles, or the like. The system comprises a storage enclosure 2 with at least one opening 12 for introducing and extracting said vehicles 100 to be stored in said parking system 1. Preferably the enclosure 2 is a substantially closed space, however it cannot be discarded that it is partially open, e.g. at the roof area.

The parking system 1 further comprises a first carrousel type transporting device 4 arranged inside the enclosure 2. This carrousel type transporting device 4 comprises a first carrousel guiding path 6 defining a guiding direction 8 and a plurality of first single vehicle holding devices 10.

Each of the first vehicle holding devices 10 is intended for holding a corresponding single vehicle 100. As it is apparent from the Figures, each first vehicle holding device 10 is movable along the first carrousel guiding path 6 in the guiding direction 8. The first carrousel guiding path 6 of this embodiment is formed by an upper and lower rail, each defining a closed guide in which the guiding hubs 32 of the first vehicle holding devices 10 is guided.

As already explained, the main object of the invention is to provide a two wheeled vehicle parking system which is optimized in terms of public space occupation in the street and which is easy to install and to enlarge. To this end, the vehicle holding devices 10 are configured to hold the corresponding vehicle 100 such that in operation of said parking system 1, the handlebar 102 of said corresponding vehicle 100 is oriented crosswise to said guiding direction 8.

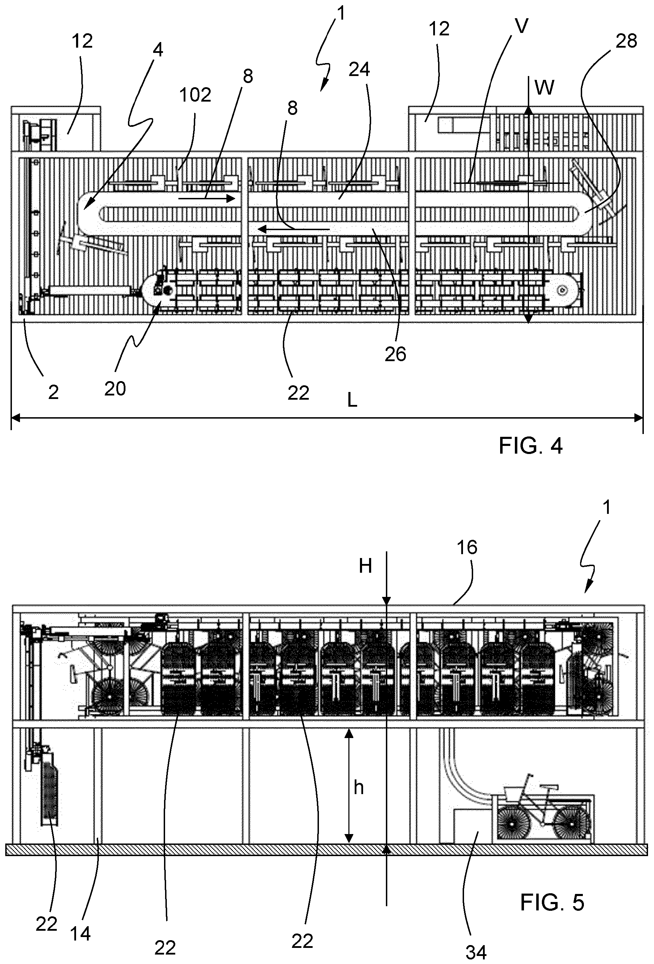

In other words, the two wheeled vehicles, e.g. bicycles, when stored in the system, they are held in the vehicle holding devices 10 such that the longitudinal plane V of the vehicle is substantially parallel to the first carrousel guiding path 6 (See Figure 4).

This is a very relevant advantage over the prior art solutions, in which the handlebar is oriented substantially parallel to the guide of the carrousel. In these prior art solutions, the space occupation in the same parking system is prioritized over the space occupation of the public space. In other words, the solution of the invention might be less compact, but much more optimized to occupy the public space, e.g. the sidewalks.

This solution is also better in terms of modularity because the enlargement of the parking system capacity requires nothing but growing in the longitudinal direction of the parking system, while maintaining its width.

Furthermore, as it is apparent from Figure 4, preferably the carrousel type transporting device 4 has a first and a second branches 24, 26. The first and second branches 24, 26 are linear and parallel to each other. At their ends, the first and second branches 24, 26 are mutually connected with connecting curved sections 28. From the figures it is clear that the vehicle holding device 10, when arriving at the end of each branch, follows the curved sections according to the direction defined by the tangency line of the corresponding curve as in Figure 4.

Also Figure 3 shows that it is especially preferrable that the first carrousel guiding path 6 lies on a plane P, to spare as much vertical room as possible.

In the embodiment shown in Figure 2 to 5, to spare longitudinal space, the holding devices 10 are configured to hold the vehicles 100 with one first wheel 104 above a second wheel 106. Indeed, the bicycles are held in vertical position, that is the centre of the first and second wheels 104, 106 lies on a line L1 substantially perpendicular to a horizontal plane. This provides for a more compact configuration, increasing the capacity of the parking system 1.

As it is apparent from Figures 2 or 4 the parking system 1 of this embodiment comprises also a second carrousel type transporting device 20 arranged inside said enclosure 2 side by side with the first carrousel type transporting device 4.

In a similar way to the first carrousel transporting device 4, the second one also comprises a second carrousel guiding path 6 defining a guiding direction 8 and a plurality of second single vehicle holding devices 22. Each of the second vehicle holding devices 22 are movable along the second carrousel guiding path 6 of the second carrousel transporting device 20 in the guiding direction 8.

As it is apparent from Figure 5 the second single vehicle holding devices 22 hold one single vehicle 100 and are movable along the second carrousel guiding path 6 in the guiding direction 8. Furthermore, this second single vehicle holding devices 22 are conceived to hold small vehicles such as scooter or e-scooter. To this end, the second single vehicle holding devices 22 are basket shaped and dimensioned to receive a scooter like vehicle 100.

It must also be pointed out that if required the first and second vehicle holding devices 10 and 22 could both be mounted in one same carrousel.

In this embodiment, the enclosure 2 is also mounted on a bridging frame 14 mounted on a ground level G, said bridging frame 14 being raised at least two meters above the ground level G.

In all embodiments of the invention it is especially preferable that when the parking system 1 is raised with a bridging frame 14 the floor height h, that is the free space for walking below the floor of the parking system, ranges between 2,2 and 2,6 m.

Also in all embodiments, it is also preferable that the overall height H of the parking system 1, measured from the ground level to the roof 16, ranges from 4,5 to 6 meters, and especially preferably from 4, 7 to 5 m.

Finally, it is also preferable that the overall width W of the parking system 1 ranges from 2 to 5 meters and the overall length L ranges from 10 to 15 m.

In this case, the parking system also comprises two vehicle elevation devices 30 movable between the ground level G and the corresponding opening 12 level for delivering the vehicles 100 to the first or second single vehicle holding devices 10, 22.

It also intended that the parking system 1 of the invention can operate 24/7 without problems. To this end the parking system 1 comprises automated control means. These control means, not shown in detail, are functionally associated to said first carrousel type transporting device 4 for autonomously controlling the storage of the vehicles 100.

When the user wants to store a bicycle he only needs to put it in the bicycle in the delivery area 34 by fitting the vehicle in the corresponding first holding device 10. Once the user has been identified and the system has checked that the vehicle is correctly held, the carrousel is driven in order for a free space to be available at the opening 12. Then the first holding device 10 is automatically driven upwards to be inserted in the free space of the carrousel.

The same applies to the second carrousel. In this case, the second carrousel type transporting device 20 comprises also automated control means for autonomously controlling the storage of the vehicles 100.

In a preferred embodiment for holding bicycles the first holding device 10 comprises an L shaped body with a concave cross section configured to simultaneously receive both wheels of said vehicle 100, and a biasing stopper movable between a loose position in which said vehicle 100 can be separated from said first holding device and a biased position in which said stopper urges said vehicle against the base of said L shaped body.

Below further embodiments of the invention will be discussed that share many features in common with the previous embodiments. Therefore, since these common features have been already described in detail, from now on only the distinguishing features will be described, while for the rest of the features, reference is made to the embodiments already described.

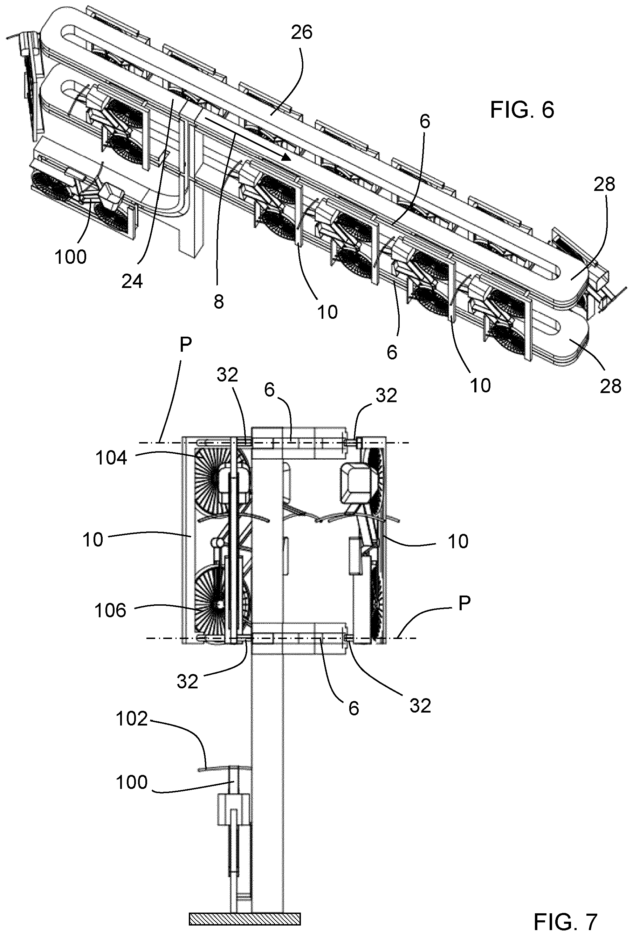

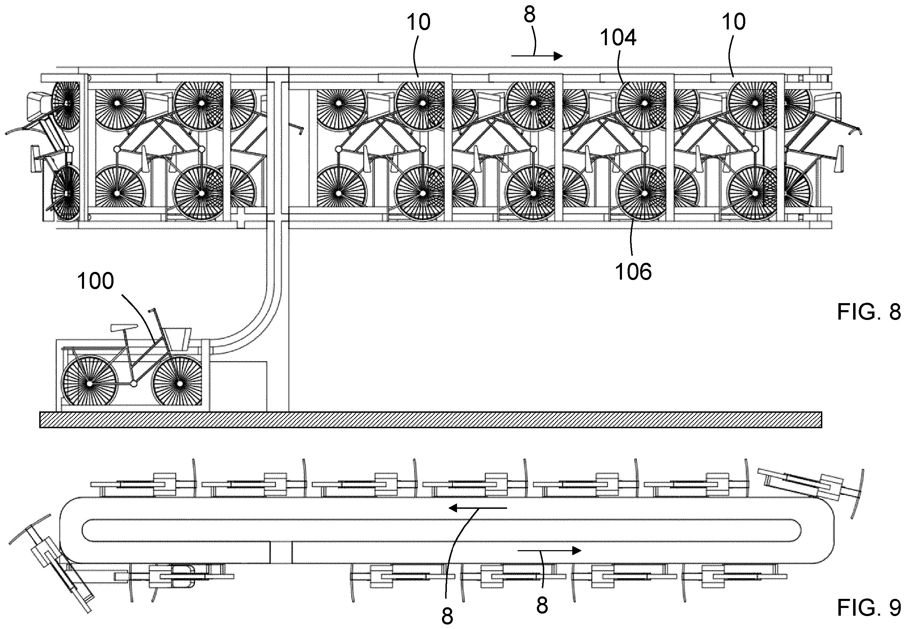

The embodiment of Figures 6 to 9 is the slim version of the previous embodiment of Figures 2 to 5. In any case, this embodiment shows more clearly the first holding device 10 conceived for bicycles. This device is an L shaped concave holding frame in which the vehicle wheels are fitted.

Alternatively, the first holding device 10 could simply be a pair of hooks for hanging the bicycle's handlebar in the corresponding direction crosswise to said guiding direction 8.

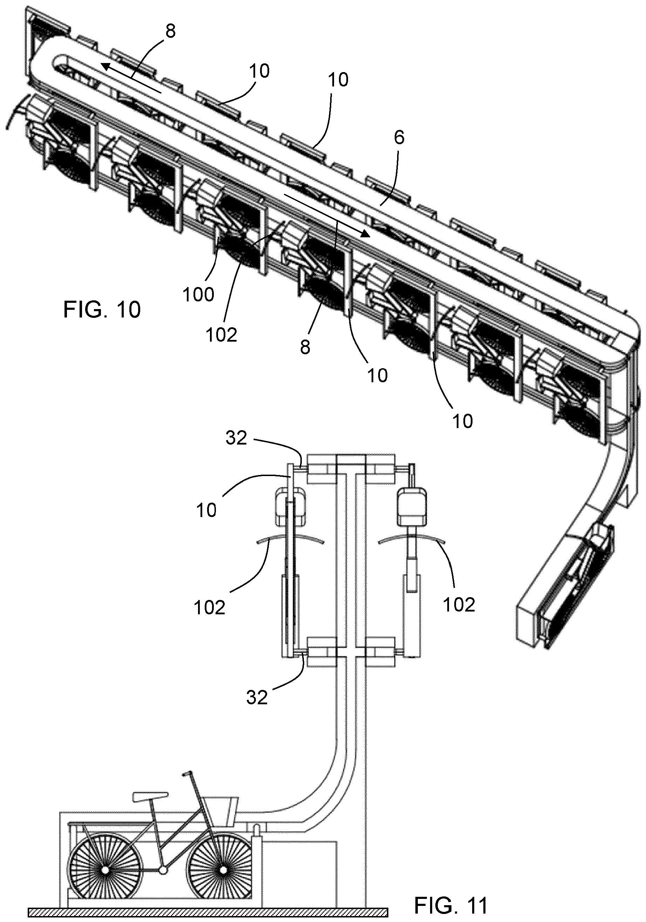

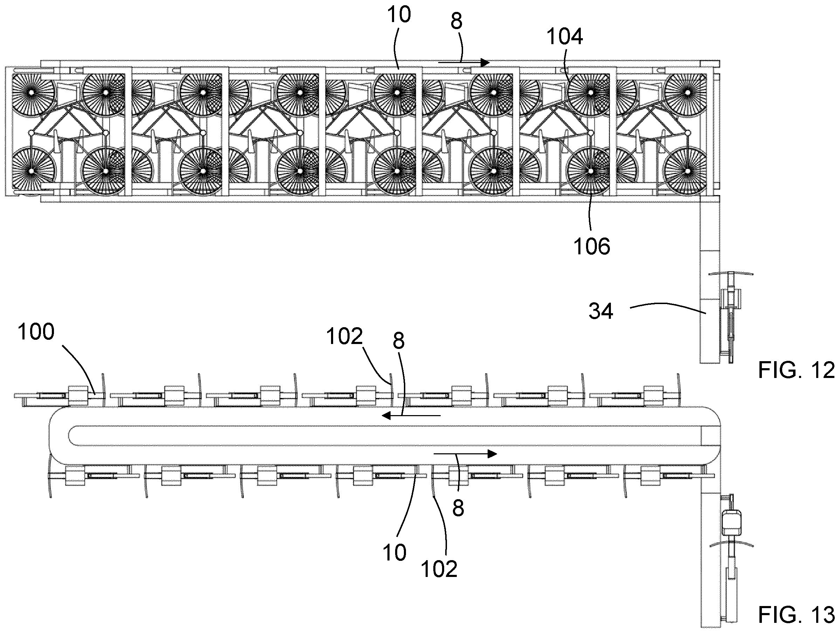

In the embodiment of Figure 10 to 13, the delivery area 34 is arranged crosswise to the longitudinal direction of the parking system 1. For the rest of the system, reference is made to previous paragraphs.

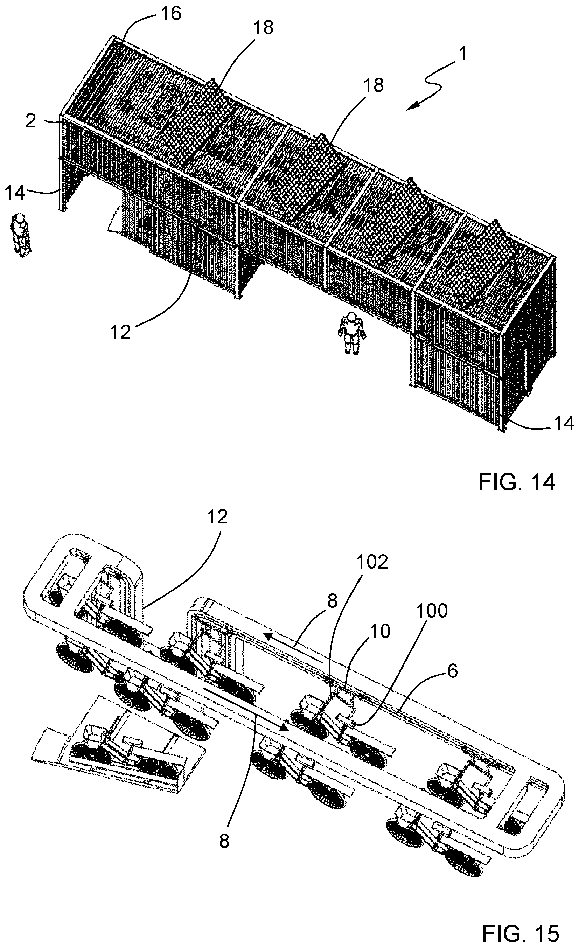

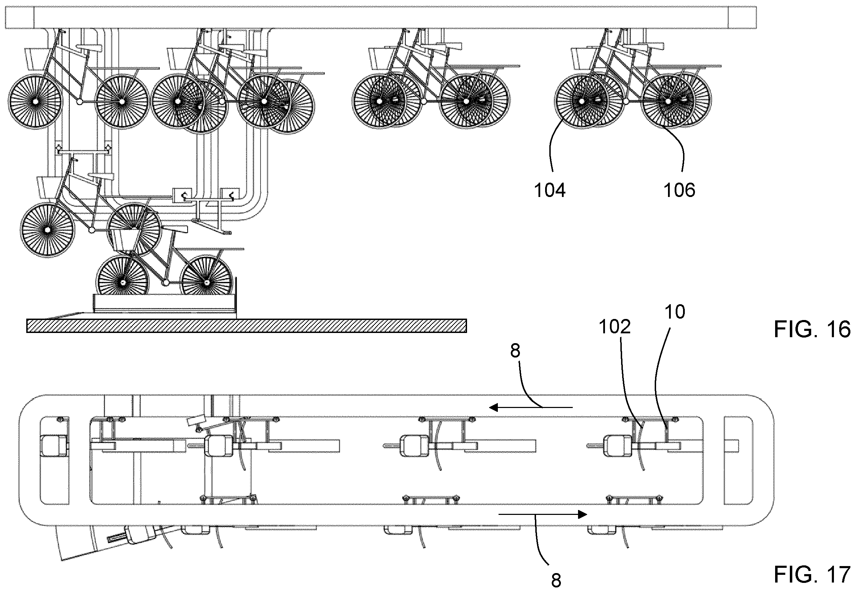

The embodiment of Figures 14 to 17 differs from the others in that in this embodiment the holding devices 10 are configured to hold said vehicle 100 with one first wheel 104 in front of the second wheel 106. Especially preferably the first wheel 104 is the front wheel and the second wheel 106 is the rear wheel and the vehicle is arranged such that the centre of the first and second wheels 104, 106 lie on a line substantially parallel to an horizontal plane.

However, as it is apparent, again the holding devices 10 hold the corresponding bicycles 100 in a way that the handlebar 102 is oriented crosswise to said guiding direction 8.

Another relevant difference in this case is that the vehicles 100 are only suspended from the holding devices 10.

Finally, in this case, the parking system also includes solar panels 18 on the rooftop.

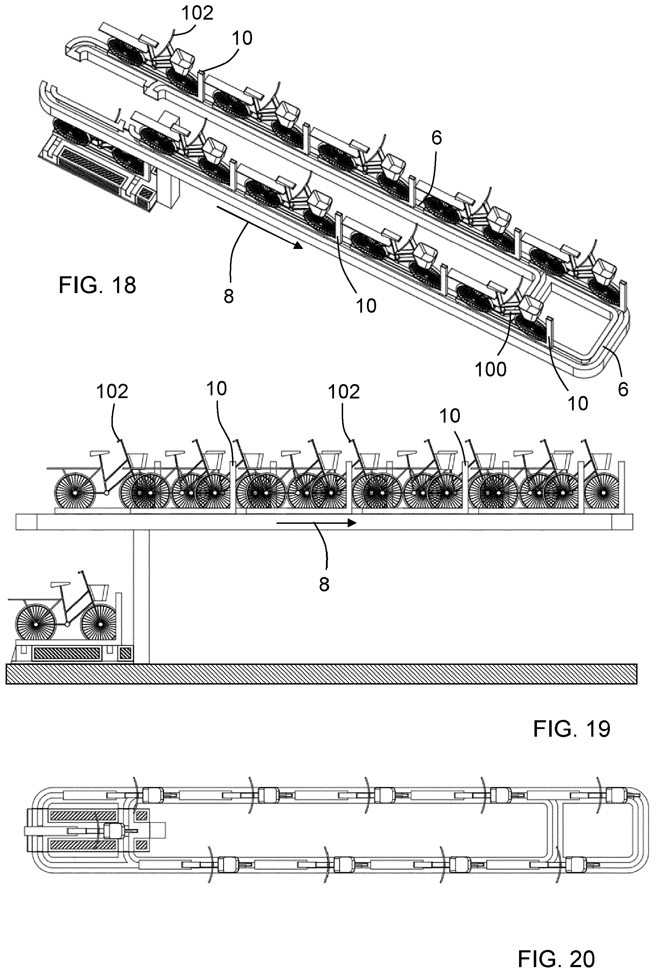

The last embodiment of the invention is shown in Figures 18 to 20. Again, the bicycles are held such that first wheel 104 in front of the second wheel 106, such that the bicycles are transported horizontally. However, in this case, the bicycles are resting on the first holding devices 10.

## Claims

1. Parking system (1) for storing a plurality of two wheeled vehicles (100), comprising
[a] a storage enclosure (2) with at least one opening (12) for introducing and extracting said vehicles (100) to be stored in said parking system (1),
[b] a first carrousel type transporting device (4) arranged inside said enclosure (2) comprising
[i] a first carrousel guiding path (6) defining a guiding direction (8) and
[ii] a plurality of first single vehicle holding devices (10), each of said first vehicle holding devices (10) holding a corresponding single vehicle (100) and being movable along said first carrousel guiding path (6) in said guiding direction (8), wherein said first carrousel guiding path (6) lies on a horizontal plane (P),
**characterized in that**
[c] said vehicle holding devices (10) are configured to hold the corresponding vehicle (100) such that in operation of said parking system (1), the handlebar (102) of said corresponding vehicle (100) is oriented crosswise to said guiding direction (8).

2. The parking system (1) according claims 1, **characterized in that** said holding devices (10) are configured to hold said vehicle (100) with one first wheel (104) above a second wheel (106).

3. The parking system (1) according to any of claims 1 or 2, **characterized in that** said holding devices (10) are configured to hold said vehicle (100) with one first wheel (104) in front of a second wheel (106).

4. The parking system (1) according to any of claims 1 to 3, **characterized in that** said enclosure (2) is mounted on a bridging frame (14) mounted on a ground level (G), said bridging frame (14) being raised at least two meters above the ground level (G) and **in that** it comprises a vehicle elevation device (30) movable between said ground level (G) and said at least one opening (12) level for delivering said vehicles (100) to said first single vehicle holding devices (10).

5. The parking system (1) according to any of claims 1 to 4, **characterized in that** it further comprises a plurality second single vehicle holding devices (22), each of said second vehicle holding devices (22) holding a single vehicle (100) and being movable along said first carrousel guiding path (6) in said guiding direction (8), said second single vehicle holding devices (22) being basket shaped and dimensioned to receive a scooter like vehicle (100).

6. The parking system (1) according to claim 5, **characterized in that** it comprises a second carrousel type transporting device (20) arranged inside said enclosure (2) side by side with said first carrousel type transporting device (4), comprising
[i] a second carrousel guiding path (6) defining a guiding direction (8) and said second carrousel guiding path (6) lying on a horizontal plane (P),
[ii] a plurality of said second single vehicle holding devices (22), each of said second vehicle holding devices (22) being movable along said second carrousel guiding path (6) in said guiding direction (8).

7. The parking system (1) according to any of claims 1 to 6, **characterized in that** said enclosure (2) comprises a roof (16), and **in that** said parking system (1) further comprises a plurality of solar panels (18), arranged at least on the roof of said enclosure (2) and **in that** and said solar panels are connected to at least a power supply point.

8. The parking system (1) according to any of claims 1 to 7, **characterized in that** it comprises automated control means, said automated control means being functionally associated to said first carrousel type transporting device (4) for autonomously controlling the storage of the vehicles (100).

9. The parking system (1) according to claim 8 when depending from claim 7, **characterized in that** said automated control means are functionally associated to said second carrousel type transporting device (20) for autonomously controlling the storage of the vehicles (100).

10. The parking system (1) according to any of claims 1 to 9, **characterized in that** said first holding device (10) comprises
[a] an L shaped body with a concave cross section configured to simultaneously receive both wheels of said vehicle (100), and
[b] a biasing stopper movable between
[i] a loose position in which said vehicle (100) can be separated from said first holding device and
[ii] a biased position in which said stopper urges said vehicle against the base of said L shaped body.

## Patentansprüche

1. Parksystem (1) zum Lagern einer Vielzahl von Zweiradfahrzeugen (100), mit
[a] einer Lagereinhausung (2) mit mindestens einer Öffnung (12) zum Zuführen und Entnehmen der in dem Parksystem (1) zu lagernden Fahrzeuge (100),
[b] einer ersten karussellartigen Transportvorrichtung (4), die innerhalb der Lagereinhausung (2) angeordnet ist, und Folgendes umfasst
[i] eine erste Karussellführungsbahn (6), die eine Führungsrichtung (8) definiert, und
[ii] eine Vielzahl von ersten einzelnen Fahrzeughaltevorrichtungen (10), wobei jede der ersten Fahrzeughaltevorrichtungen (10) ein entsprechendes einzelnes Fahrzeug (100) hält und entlang der ersten Karussellführungsbahn (6) in der Führungsrichtung (8) beweglich ist, wobei die erste Karussellführungsbahn (6) auf einer horizontalen Ebene (P) liegt,
**dadurch gekennzeichnet, dass**
[c] die Fahrzeughaltevorrichtungen (10) konfiguriert sind, das entsprechende Fahrzeug (15, 100) so zu halten, dass beim Betrieb des Parksystems (1) die Lenkstange (102) des entsprechenden Fahrzeugs (100) quer zur Führungsrichtung (8) ausgerichtet ist.

2. Parksystem (1) gemäß Anspruch1, **dadurch gekennzeichnet, dass** die Fahrzeughaltevorrichtungen (10) konfiguriert sind, das Fahrzeug (100) mit einem ersten Rad (104) über einem zweiten Rad (106) zu halten.

3. Parksystem (1) gemäß einem der Ansprüche 1 oder 2, **dadurch gekennzeichnet, dass** die Fahrzeughaltevorrichtungen (10) konfiguriert sind, das Fahrzeug (100) mit einem ersten Rad (104) vor einem zweiten Rad (106) zu halten.

4. Parksystem (1) gemäß einem der Ansprüche 1 bis 3, **dadurch gekennzeichnet, dass** die Einhausung (2) auf einem Überbrückungsrahmen (14) montiert ist, der auf einem Bodenniveau (G) montiert ist, wobei der Überbrückungsrahmen (14) mindestens zwei Meter über dem Bodenniveau (G) erhöht ist, und dadurch, dass es eine Fahrzeughebevorrichtung (30) umfasst, die zwischen dem Bodenniveau (G) und dem Niveau der mindestens einen Öffnung (12) beweglich ist, um die Fahrzeuge (100) an die ersten einzelnen Fahrzeughaltevorrichtungen (10) zu befördern.

5. Parksystem (1) gemäß einem der Ansprüche 1 bis 4, **dadurch gekennzeichnet, dass** es ferner eine Vielzahl von zweiten einzelnen Fahrzeughaltevorrichtungen (22) umfasst, wobei jede der zweiten Fahrzeughaltevorrichtungen (22) ein einzelnes Fahrzeug (100) hält und entlang der ersten Karussellführungsbahn (6) in der Führungsrichtung (8) beweglich ist, wobei die zweiten einzelnen Fahrzeughaltevorrichtungen (22) korbförmig und zum Aufnehmen eines motorrollerähnlichen Fahrzeugs (100) dimensioniert sind.

6. Parksystem (1) gemäß Anspruch 5, **dadurch gekennzeichnet, dass** es eine zweite karussellartige Transportvorrichtung (20), die innerhalb der Einhausung (2) neben der ersten karussellartigen Transportvorrichtung (4) angeordnet ist, umfasst, mit:
[i] einer zweiten Karussellführungsbahn (6), die eine Führungsrichtung (8) definiert, und wobei die zweite Karussellführungsbahn (6) auf einer horizontalen Ebene (P) liegt,
[ii] einer Vielzahl von zweiten einzelnen Fahrzeughaltevorrichtungen (22), wobei jede der zweiten Fahrzeughaltevorrichtungen (22) entlang der zweiten Karussellführungsbahn (6) in der Führungsrichtung (8) beweglich ist.

7. Parksystem (1) gemäß einem der Ansprüche 1 bis 6, **dadurch gekennzeichnet, dass** die Einhausung (2) ein Dach (16) umfasst, und dadurch, dass das Parksystem (1) ferner eine Vielzahl von Solarmodulen (18) umfasst, die zumindest auf dem Dach der Einhausung (2) angeordnet sind, und dadurch, dass die Solarmodule mit mindestens einem Stromversorgungspunkt verbunden sind.

8. Parksystem (1) gemäß einem der Ansprüche 1 bis 7, **dadurch gekennzeichnet, dass** es automatisierte Steuermittel umfasst, wobei die automatisierten Steuermittel funktionell mit der ersten karussellartigen Transportvorrichtung (4) verbunden sind, um die Lagerung der Fahrzeuge (100) autonom zu steuern.

9. Parksystem (1) gemäß Anspruch 8, wenn er von Anspruch 7 abhängt, **dadurch gekennzeichnet, dass** die automatisierten Steuermittel funktionell mit der zweiten karussellartigen Transportvorrichtung (20) verbunden sind, um die Lagerung der Fahrzeuge (100) autonom zu steuern.

10. Parksystem (1) gemäß einem der Ansprüche 1 bis 9, **dadurch gekennzeichnet, dass** die erste Fahrzeughaltevorrichtung (10) Folgendes umfasst:
[a] einen L-förmigen Körper mit einem konkaven Querschnitt, der konfiguriert ist, gleichzeitig beide Räder des Fahrzeugs (100) aufzunehmen, und
[b] einen Vorspannanschlag, der zwischen
[i] einer losen Position, in der das Fahrzeug (100) von der ersten Haltevorrichtung getrennt werden kann, und
[ii] einer vorgespannten Position, in der der Anschlag das Fahrzeug gegen die Basis des L-förmigen Körpers drückt, beweglich ist.

## Revendications

1. Système de stationnement (1) pour le stockage d'une pluralité de véhicules à deux roues (100), comprenant
[a] une enceinte de stockage (2) avec au moins une ouverture (12) pour l'introduction et l'extraction desdits véhicules (100) à stocker dans ledit système de stationnement (1),
[b] un premier dispositif de transport de type carrousel (4) agencé à l'intérieur de ladite enceinte (2) comprenant
[i] un premier trajet de guidage de carrousel (6) définissant une direction de guidage (8) et
[ii] une pluralité de premiers dispositifs de maintien de véhicule unique (10), chacun desdits premiers dispositifs de maintien de véhicule (10) maintenant un véhicule unique (100) correspondant et étant mobile le long dudit premier trajet de guidage de carrousel (6) dans ladite direction de guidage (8), où ledit premier trajet de guidage de carrousel (6) se trouve sur un plan horizontal (P),
**caractérisé en ce que**
[c] lesdits dispositifs de maintien de véhicule (10) sont configurés pour maintenir le véhicule (100) correspondant de sorte que, lors du fonctionnement dudit système de stationnement (1), le guidon (102) dudit véhicule (100) correspondant soit orienté transversalement à ladite direction de guidage (8).

2. Système de stationnement (1) selon la revendication 1, **caractérisé en ce que** lesdits dispositifs de maintien (10) sont configurés pour maintenir ledit véhicule (100) avec une première roue (104) au-dessus d'une seconde roue (106).

3. Système de stationnement (1) selon l'une des revendications 1 et 2, **caractérisé en ce que** lesdits dispositifs de maintien (10) sont configurés pour maintenir ledit véhicule (100) avec une première roue (104) devant une seconde roue (106).

4. Système de stationnement (1) selon l'une des revendications 1 à 3, **caractérisé en ce que** ladite enceinte (2) est montée sur un cadre de pontage (14) monté sur un niveau du sol (G), ledit cadre de pontage (14) étant surélevé d'au moins deux mètres au-dessus du niveau du sol (G), et **en ce qu'**il comprend un dispositif d'élévation de véhicule (30) mobile entre ledit niveau du sol (G) et ledit au moins un niveau d'ouverture (12) pour fournir lesdits véhicules (100) vers lesdits premiers dispositifs de maintien de véhicule unique (10).

5. Système de stationnement (1) selon l'une des revendications 1 à 4, **caractérisé en ce qu'il** comprend en outre une pluralité de seconds dispositifs de maintien de véhicule unique (22), chacun desdits seconds dispositifs de maintien de véhicule (22) maintenant un véhicule (100) unique et étant mobile le long dudit premier trajet de guidage de carrousel (6) dans ladite direction de guidage (8), lesdits seconds dispositifs de maintien de véhicule unique (22) ayant la forme d'un panier et étant dimensionnés pour recevoir un véhicule (100) de type scooter.

6. Système de stationnement (1) selon la revendication 5, **caractérisé en ce qu'il** comprend un second dispositif de transport de type carrousel (20) agencé à l'intérieur de ladite enceinte (2) côte à côte avec ledit premier dispositif de transport de type carrousel (4), comprenant
[i] un second trajet de guidage de carrousel (6) définissant une direction de guidage (8) et ledit second trajet de guidage de carrousel (6) se trouvant sur un plan horizontal (P),
[ii] une pluralité desdits seconds dispositifs de maintien de véhicule unique (22), chacun desdits seconds dispositifs de maintien de véhicule (22) étant mobile le long dudit second trajet de guidage de carrousel (6) dans ladite direction de guidage (8).

7. Système de stationnement (1) selon l'une des revendications 1 à 6, **caractérisé en ce que** ladite enceinte (2) comprend un toit (16), et **en ce que** ledit système de stationnement (1) comprend en outre une pluralité de panneaux solaires (18), agencés au moins sur le toit de ladite enceinte (2), et **en ce que** lesdits panneaux solaires sont reliés à au moins un point d'alimentation électrique.

8. Système de stationnement (1) selon l'une des revendications 1 à 7, **caractérisé en ce qu'il** comprend des moyens de commande automatisés, lesdits moyens de commande automatisés étant associés fonctionnellement audit premier dispositif de transport de type carrousel (4) pour commander de manière autonome le stockage des véhicules (100).

9. Système de stationnement (1) selon la revendication 8 lorsqu'elle dépend de la revendication 7, **caractérisé en ce que** lesdits moyens de commande automatisés sont associés fonctionnellement audit second dispositif de transport de type carrousel (20) pour commander de manière autonome le stockage des véhicules (100).

10. Système de stationnement (1) selon l'une des revendications 1 à 9, **caractérisé en ce que** ledit premier dispositif de maintien (10) comprend
[a] un corps en forme de L avec une section transversale concave configuré pour recevoir simultanément les deux roues dudit véhicule (100), et
[b] une butée de sollicitation mobile entre
[i] une position desserrée dans laquelle ledit véhicule (100) peut être séparé dudit premier dispositif de maintien et
[ii] une position sollicitée dans laquelle ladite butée pousse ledit véhicule contre la base dudit corps en forme de L.
